# EUROPEAN PATENT APPLICATION

(11) **EP 4 572 438 A1**
(43) Date of publication of application: **18.06.2025**
(21) Application number: 23863360.6
(22) Date of filing: 11.08.2023
(51) Int. Cl.: H04W 60/04, H04W 88/08, H04W 88/12, H04W 92/12, H04W 92/20, H04W 92/24

(54) **ELECTRODE DEVICE AND METHOD FOR SUBSCRIPTION PROCEDURE**

(30) Priority: 06.09.2022 KR 20220113121
(71) Applicant: Samsung Electronics Co., Ltd., Suwon-si, Gyeonggi-do 16677 (KR)
(72) Inventor: SONG, Junhyuk, Suwon-si Gyeonggi-do 16677 (KR); KHO, Youngsung, Suwon-si Gyeonggi-do 16677 (KR); KIM, Chulmin, Suwon-si Gyeonggi-do 16677 (KR); PARK, Soyeun, Suwon-si Gyeonggi-do 16677 (KR); LEE, Chungkeun, Suwon-si Gyeonggi-do 16677 (KR)
(74) Representative: Gulde & Partner
(86) International application number: PCT/KR2023/011903
(87) International publication number: WO 2024/053880

(57) **Abstract**

The present disclosure relates to a 5th generation (5G) or pre-5G communication system for supporting a data transmission rate higher than that of a 4th generation (4G) communication system such as long term evolution (LTE). In embodiments of the present disclosure, a device performed by means of an E2 node may comprise at least one transceiver, and at least one processor coupled to the at least one transceiver. The at least one processor can be configured to receive, from a near-real-time (Near-RT) RAN (radio access network) intelligent controller (RIC), a RIC subscription request message. The at least one processor can be configured to transmit a RIC subscription response message to the Near-RT RIC. The RIC subscription request message can include a RAN function list information element (IE) for indicating one or more RAN functions.

## Description

### [Technical Field]

The following descriptions relate to an electronic device and a method for a subscription procedure.

### [Background Art]

In order to meet the increasing demand for wireless data traffic after the commercialization of 4G (4^{th} generation) communication systems, efforts have been made to develop improved 5G (5^{th} generation) communication systems or pre-5G communication systems. For this reason, 5G communication systems or pre-5G communication systems are referred to as Beyond 4G Network communication systems or Post Long Term Evolution (LTE) systems.

To achieve high data transmission rates, the implementation of 5G communication systems in a millimeter wave (mmWave) band (e.g., 60 GHz band) is being considered. In order to mitigate a path loss of radio waves in the millimeter wave band and extend a propagation distance of the radio waves, beamforming, massive MIMO, Full Dimensional MIMO (FD-MIMO), array antenna, analog beam-forming, and large scale antenna technologies are being discussed in the 5G communication system.

In addition, in order to enhance network performance, technologies such as evolved small cells, advanced small cells, cloud radio access network (cloud RAN), ultra-dense network, device to device communication (D2D), wireless backhaul, moving network, cooperative communication, coordinated multi-points (CoMP), and interference cancellation are being developed in 5G communication systems.

In addition, advanced coding modulation (ACM) techniques such as hybrid frequency shift keying and quadrature amplitude modulation (FQAM) and sliding window superposition coding (SWSC) and advanced access technologies such as filter bank multi-carrier (FBMC), non-orthogonal multiple access (NOMA), and sparse code multiple access (SCMA) are being developed in the 5G systems.

With the commercialization of 5G systems and new radio or next radio (NR) to meet the demand for wireless data traffic, high-data-rate services are being provided to users through 5G systems, similar to 4G, and various wireless communication services, including Internet of Things (IoT) and services requiring high reliability for specific purposes, are expected to be provided. In a current system where the fourth-generation communication system and the fifth-generation communication system are mixed, open radio access network (O-RAN) established by operators and equipment providers defines E2 application protocol (E2AP) standard in an application protocol of E2 interface between an E2 node and a near-real-time (Near-RT) radio access network (RAN) intelligent controller (RIC).

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

In embodiments of the present disclosure, a method performed by an E2 node is provided. The method may comprise receiving, from a near-real time (Near-RT) radio access network (RAN) intelligent controller (RIC), an RIC subscription request message. The method may comprise transmitting, to the Near-RT RIC, an RIC subscription response message. The RIC subscription request message may include a RAN function list information element (IE) for indicating one or more RAN functions.

In embodiments of the present disclosure, a method performed by an E2 node is provided. The method may comprise receiving, from a near-real time (Near-RT) radio access network (RAN) intelligent controller (RIC), an RIC subscription request message. The method may comprise transmitting, to the Near-RT RIC, an RIC subscription response message. The RIC subscription request message may include a RAN function identifier (ID) for indicating a RAN function, and an event trigger definition list including one or more event trigger definition information elements (IEs) associated with the RAN function ID.

In embodiments of the present disclosure, a method performed by a near-real time (Near-RT) radio access network (RAN) intelligent controller (RIC) is provided. The method may comprise transmitting, to an E2 node, an RIC subscription request message. The method may comprise receiving, from the E2 node, an RIC subscription response message. The RIC subscription request message may include a RAN function list information element (IE) for indicating one or more RAN functions.

In embodiments of the present disclosure, a method performed by a near-real time (Near-RT) radio access network (RAN) intelligent controller (RIC) is provided. The method may comprise transmitting, to an E2 node, an RIC subscription request message. The method may comprise receiving, from the E2 node, an RIC subscription response message. The RIC subscription request message may include a RAN function identifier (ID) for indicating a RAN function, and an event trigger definition list including one or more event trigger definition information elements (IEs) associated with the RAN function ID.

In embodiments of the present disclosure, an apparatus performed by an E2 node is provided. The apparatus may comprise at least one transceiver, and at least one processor coupled to the at least one transceiver. The at least one processor may be configured to receive, from a near-real time (Near-RT) radio access network (RAN) intelligent controller (RIC), an RIC subscription request message. The at least one processor may be configured to transmit, to the Near-RT RIC, an RIC subscription response message. The RIC subscription request message may include a RAN function list information element (IE) for indicating one or more RAN functions.

In embodiments of the present disclosure, an apparatus performed by an E2 node is provided. The apparatus may comprise at least one transceiver, and at least one processor coupled to the at least one transceiver. The at least one processor may be configured to receive, from a near-real time (Near-RT) radio access network (RAN) intelligent controller (RIC), an RIC subscription request message. The at least one processor may be configured to transmit, to the Near-RT RIC, an RIC subscription response message. The RIC subscription request message may include a RAN function identifier (ID) for indicating a RAN function, and an event trigger definition list including one or more event trigger definition information elements (IEs) associated with the RAN function ID.

In embodiments of the present disclosure, an apparatus performed by a near-real time (Near-RT) radio access network (RAN) intelligent controller (RIC) is provided. The apparatus may comprise at least one transceiver, and at least one processor coupled to the at least one transceiver. The at least one processor may be configured to transmit, to an E2 node, an RIC subscription request message. The at least one processor may be configured to receive, from the E2 node, an RIC subscription response message. The RIC subscription request message may include a RAN function list information element (IE) for indicating one or more RAN functions.

In embodiments of the present disclosure, an apparatus performed by a near-real time (Near-RT) radio access network (RAN) intelligent controller (RIC) is provided. The apparatus may comprise at least one transceiver, and at least one processor coupled to the at least one transceiver. The at least one processor may be configured to transmit, to an E2 node, an RIC subscription request message. The at least one processor may be configured to receive, from the E2 node, an RIC subscription response message. The RIC subscription request message may include a RAN function identifier (ID) for indicating a RAN function, and an event trigger definition list including one or more event trigger definition information elements (IEs) associated with the RAN function ID.

In embodiments of the present disclosure, a non-transitory storage medium is provided. The non-transitory storage medium may comprise memory storing instructions. The instructions, when executed by at least one processor, may cause an E2 node to receive, from a near-real time (Near-RT) radio access network (RAN) intelligent controller (RIC), an RIC subscription request message, and transmit, to the Near-RT RIC, an RIC subscription response message. According to an embodiment, the RIC subscription request message may include a RAN function identifier (ID) for indicating a RAN function. According to an embodiment, the RIC subscription request message may include an event trigger definition list including one or more event trigger definition information elements (IEs) associated with the RAN function ID.

In embodiments of the present disclosure, a non-transitory storage medium is provided. The non-transitory storage medium may comprise memory storing instructions. The instructions, when executed by at least one processor, may cause a near-real time (Near-RT) radio access network (RAN) intelligent controller (RIC) to transmit, to an E2 node, an RIC subscription request message, and receive, from the E2 node, an RIC subscription response message. According to an embodiment, the RIC subscription request message may include a RAN function list information element (IE) for indicating one or more RAN functions. According to an embodiment, the RIC subscription request message may include RAN function identifier (ID) for indicating a RAN function and an event trigger definition list including one or more event trigger definition information elements (IEs) associated with the RAN function ID.

### [Description of the Drawings]

FIG. 1 illustrates an example of a 4^{th} generation (4G) long term evolution (LTE) core system.
FIG. 2A illustrates an example of a 5^{th} generation (5G) non-standard alone (NSA) system.
FIG. 2B illustrates an example of an architecture for an O-RAN.
FIG. 3 illustrates a protocol stack of an E2 application protocol message in a wireless access network according to embodiments.
FIG. 4 illustrates an example of a connection between a base station and a radio access network intelligence controller (RIC) in a wireless access network according to embodiments.
FIG. 5 illustrates a configuration of a device in a wireless access network according to embodiments.
FIG. 6 illustrates a logical function related to an E2 message of an E2 node and an RIC in a wireless access network according to embodiments.
FIG. 7 illustrates examples of a function split between an E2 node and an RIC according to embodiments.
FIG. 8 illustrates an implementation example of an E2 node and an RIC according to embodiments.
FIG. 9 illustrates examples of function split between a centralized unit (CU) and an RIC according to embodiments.
FIG. 10 illustrates an example of a subscription procedure of an E2 node and an RIC according to embodiments.
FIG. 11A illustrates an example of mapping between an application and a radio access network (RAN) function according to an embodiment.
FIG. 11B illustrates examples of a plurality of subscription procedures of an E2 node and an RIC for a service.
FIG. 12 illustrates an example of a subscription procedure for supporting multiple RAN functions according to an embodiment.
FIG. 13 illustrates an example of a subscription procedure for supporting multiple event trigger definitions according to an embodiment.
FIG. 14 illustrates an example of a subscription procedure for supporting multiple RAN functions and multiple event trigger definitions according to an embodiment.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Hereinafter, the present disclosure relates to a control procedure between a device in a radio access network (RAN) and a device controlling the RAN in a wireless communication system. Specifically, the present disclosure relates to a procedure, a message, and a method for an E2 node and an RIC to perform standard-compliant operations by providing the RIC with a version number of E2AP standard (e.g., E2AP 2.02) from the E2 node on an E2 interface and ensure backward compatibility.

The terms referring to a configuration (e.g., setup, setting, arrangement, control), terms referring to a signal (e.g., packet, message, signal, information, signaling), terms referring to a resource (e.g., section, symbol, slot, subframe, radio frame, subcarrier, resource element (RE), resource block (RB), bandwidth part (BWP), occasion), terms referring to an operation state (e.g., step, operation, procedure), terms referring to data (e.g., packet, message, user stream, information, bit, symbol, codeword), terms referring to a channel, terms referring to a network entity (e.g., distributed unit (DU), radio unit (RU), central unit (CU), control plane (CU-CP), user plane (CU-UP), open radio access network (O-RAN) DU (O-DU), O-RAN RU (O-RU), O-RAN CU (O-CU), O-RAN CU-CP (O-CU-UP), O-RAN CU-CP (O-CU-CP)), terms referring to a device component, and the like, which are used in the following description are exemplified for convenience of explanation. Therefore, the present disclosure is not limited to terms to be described below, and another term having an equivalent technical meaning may be used. In addition, a term such as '...unit, '...device, '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' refer to including at least one of 'C' or 'D', that is, {'C', 'D', and 'C' and 'D'}.

In addition, the present disclosure describes various embodiments using terms used in some communication standards (e.g., 3rd generation partnership project (3GPP), extensible radio access network (xRAN), open radio access network (O-RAN)), but these are merely an example for explanation. Various embodiments of the present disclosure may be easily modified and applied in other communication systems.

With the commercialization of 4^{th} generation (4G)/5^{th} generation (5G) communication systems (e.g., new radio (NR)), differentiated service support for users in virtualized networks has become required. 3GPP is a joint research project among mobile communication-related organizations aimed at developing third-generation mobile communication system standards that are globally applicable within a scope of IMT-2000 project of the International Telecommunication Union (ITU). 3GPP was established in December 1998, and 3GPP standards are based on advanced GSM standards, and encompass radio, core network, and service architecture in the scope of standardization. Accordingly, open radio access network (O-RAN) newly defines radio unit (RU), digital unit (DU), central unit (CU)-control plane (CP), and CU-user plane (CU-UP), which are nodes constitute 3GPP network entity (NE) and a base station, as O-RAN (O)-RU, O-DU, O-CU-CP, and O-CU-UP, respectively, and further standardized near-real-time (NRT) radio access network intelligent controller (RT). The present disclosure is for supporting an operator specific service model in an E2 interface in which the RIC requests a service from an O-DU, O-CU-CP, or O-CU-UP. Herein, O-RU, O-DU, O-CU-CP, and O-CU-UP may be understood as objects constituting an RAN capable of operating according to Othe -RAN standard, and may be referred to as an E2 node. E2 application protocol (E2AP) is used between the RIC and E2 nodes utilizes E2 application protocol (E2AP), as an interface for the objects constituting the RAN capable of operating according to O -RAN standard.

The RIC is a logical node capable of collecting information on a cell site where a terminal and O-DU, O-CU-CP or O-CU-UP transmit and receive. The RIC may be implemented in a server format that is centrally located in one physical location. Connections between O-DU and RIC, O-CU-CP and RIC, and O-CU-UP and RIC may be established through Ethernet. To this end, an interface standard for communication between O-DU and RIC, O-CU-CP and RIC, and O-CU-UP and RIC have become necessary, and a message standard for E2-DU, E2-CU-CP, and E2-CU-UP and the definition of a procedure between RIC and O-DU, O-CU-CP, and O-CU-UP are required. In particular, differentiated service support for users is required in a virtualized network, and by centralizing call processing messages/functions generated in O-RAN to RIC, a functional definition of messages of E2-DU, E2-CU-CP, and E2-CU-UP to support services for wide cell coverage is required.

The RIC may communicate with O-DU, O-CU-CP, and O-CU-UP using the E2 interface, and may set event occurrence conditions by generating and transmitting a subscription message. Specifically, the RIC may set call processing EVENT by generating an E2 subscription request message and transmitting it to an E2 node (e.g., O-CU-CP, O-CU-UP, O-DU). In addition, after setting the EVENT, the E2 node transmits the transmitted subscription request response message to the RIC.

The E2 node may transmit a current state to the RIC through an E2 indication/report. The RIC may provide control for the O-DU, O-CU-CP, and O-CU-UP using an E2 control message. Various embodiments of the present disclosure propose an E2 indication message that transmits measurement information per UE at a period set by a subscription event condition in the O-DU. In addition, various embodiments of the present disclosure propose a message for controlling a resource transmitted from the RIC to the O-DU.

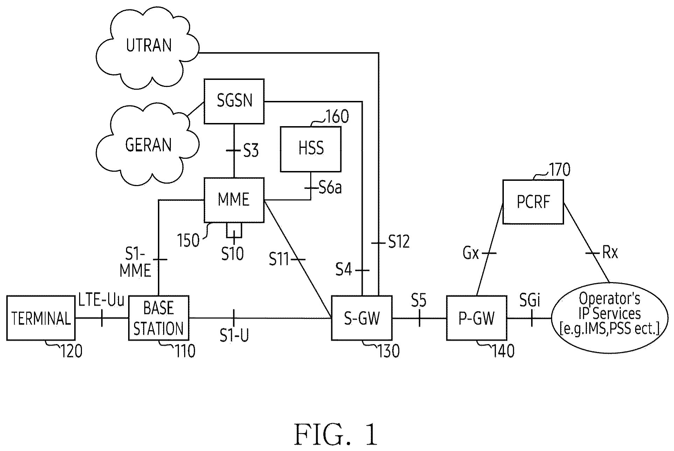

FIG. 1 illustrates an example of a 4^{th} generation (4G) long term evolution (LTE) core system.

Referring to FIG. 1, the LTE core system includes a base station 110, a terminal 120, a serving gateway (S-GW) 130, a packet data network gateway (P-GW) 140, a mobility management entity (MME) 150, a home subscriber server (HSS) 160, and a policy and charging rule function (PCRF) 170.

The base station 110 is a network infrastructure that provides the terminal 120 with wireless access. For example, the base station 110 is a device that performs scheduling by collecting state information such as a buffer state, available transmission power, and a channel state of the terminal 110. The base station 110 has a coverage defined as a certain geographical area based on a distance capable of transmitting a signal. The base station 110 is connected to the MME 150 through an S1-MME interface. In addition to the base station, the base station 110 may be referred to as an 'access point (AP)', 'eNodeB (eNB)', 'wireless point', 'transmission/reception point (TRP)', or another term having an equivalent technical meaning.

The terminal 120 is a device used by a user and performs communication with the base station 110 through a wireless channel. In some cases, the terminal 120 may be operated without the user's involvement. That is, at least one of the terminal 120 and the terminal 130, which is a device performing machine type communication (MTC), may not be carried by the user. In addition to the terminal, the terminal 120 may be referred to as 'user equipment (UE)', 'mobile station', 'subscriber station', 'customer-premises equipment (CPE)', 'remote terminal', 'wireless terminal', or 'user device' or another term having an equivalent technical meaning.

The S-GW 130 provides a data bearer and creates or controls the data bearer in accordance with a control of the MME 150. For example, the S-GW 130 processes a packet arriving from the base station 110 or a packet to be forwarded to the base station 110. In addition, the S-GW 130 may serve as an anchor when handing over between base stations of the terminal 120. The P-GW 140 may function as a connection point with an external network (e.g., the Internet). In addition, the P-GW 140 assigns an Internet Protocol (IP) address to the terminal 120 and serves as an anchor for the S-GW 130. In addition, the P-GW 140 may apply a Quality of Service (QoS) policy of the terminal 120 and manage account data.

The MME 150 manages mobility of the terminal 120. In addition, the MME 150 may perform authentication, bearer management, and the like for the terminal 120. That is, the MME 150 is responsible for mobility management and various control functions for the terminal. The MME 150 may be linked with a serving GPRS support node (SGSN).

The HSS 160 stores key information and a subscriber profile for authentication of the terminal 120. The key information and the subscriber profile are transmitted from the HSS 160 to the MME 150 when the terminal 120 connects to a network.

The PCRF 170 defines a rule for a policy and charging. The stored information may be transferred from the PCRF 180 to the P-GW 140, and the P-GW 140 may perform control (e.g. QoS management, charging, and the like) for the terminal 120 based on the information provided from the PCRF 180.

A carrier aggregation (hereinafter, CA) technology is a technology that combines a plurality of component carriers and increases a frequency usage efficiency in terms of a terminal or a base station, as a terminal transmits and receives a signal using simultaneously the plurality of component carriers. Specifically, according to the CA technology, a terminal and a base station may transmit and receive a signal using a wideband by using the plurality of component carriers in an uplink (UL) and a downlink (DL), respectively, and at this time, each component carrier is within a different frequency band. Hereinafter, the uplink refers to a communication link through which a terminal transmits a signal to a base station, and the downlink refers to a communication link through which a base station transmits a signal to a terminal. At this time, the number of uplink component carriers and downlink component carriers may be different from each other.

Dual connectivity or multi connectivity is a technology in which one terminal is connected to multiple different base stations to simultaneously transmit and receive signals using carriers in multiple base stations located in different frequency bands, thereby increasing frequency usage efficiency in terms of the terminal or base station. A terminal may be simultaneously connected to a first base station (e.g., a base station that provides a service using LTE technology or 4^{th} generation mobile communication technology) and a second base station (e.g., a base station that provides a service using new radio (NR) technology or 5^{th} generation (5G) mobile communication technology) to transmit and receive traffic. In this case, frequency resources used by each base station may be located in different bands. As described above, a method of operating based on the dual connection method of LTE and NR may be referred to as 5G non-standalone (NSA).

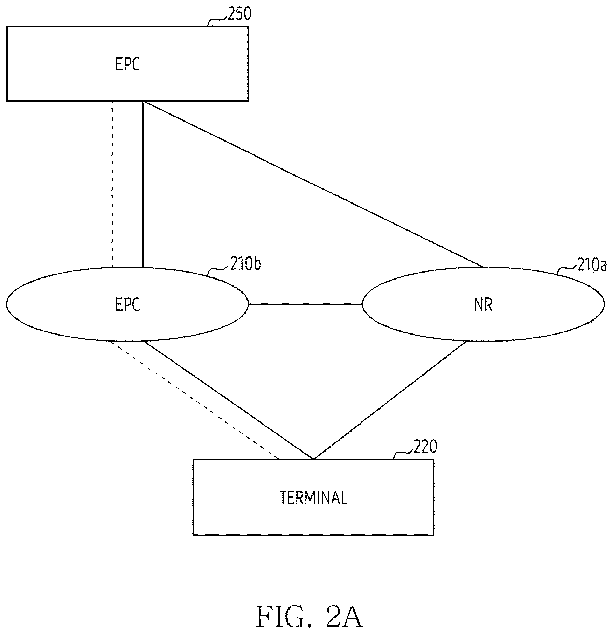

FIG. 2A illustrates an example of a 5^{th} generation (5G) non-standard alone (NSA) system.

Referring to FIG. 2A, the 5G NSA system includes an NR RAN 210a, an LTE RAN 210b, a terminal 220, and an evolved packet core (EPC) 250. The NR RAN 210a and the LTE RAN 210b may be connected to the EPC 150, and the terminal 220 may receive a service from either or both of the NR RAN 210a and the LTE RAN 210b simultaneously. The NR RAN 210a includes at least one NR base station, and the LTE RAN 210b includes at least one LTE base station. Herein, the NR base station may be referred to as a '5^{th} generation node (5G node)', 'next generation nodeB (gNB)', or another term having an equivalent technical meaning. In addition, the NR base station may have a structure separated into a central unit (CU) and a digital unit (DU), and in addition, the CU may have a structure separated into a CU-control plane (CP) unit and a CU-user plane (UP) unit.

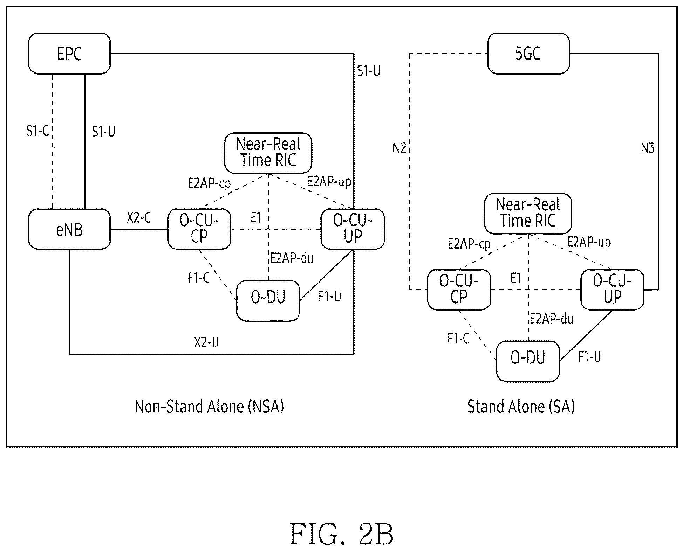

In a structure such as FIG. 2, the terminal 220 may perform a radio resource control (RRC) connection through a first base station (e.g., a base station belonging to the LTE RAN 210b) and may be serviced with a function (e.g., connection management, mobility management, and the like) provided in a control plane. In addition, the terminal 220 may be provided with additional radio resources for transmitting and receiving data through a second base station (e.g., a base station belonging to the NR RAN 210a). This dual connectivity technology using LTE and NR may be referred to as evolved universal terrestrial radio access (E-UTRA) - NR dual connectivity (EN-DC). Similarly, a dual connectivity technology in which the first base station uses the NR technology and the second base station uses the LTE technology is referred to as NR - E-UTRA dual connectivity (NE-DC). In addition, various embodiments may be applied to various forms of multiple connectivity and a carrier aggregation technology. In addition, various embodiments may be applied even if a first system using a first communication technology and a second system using a second communication technology are implemented in one device, or a first base station and a second base station are located in the same geographical location.

FIG. 2B illustrates an example of an architecture for an O-RAN. For the purpose of E2-SM-key performance indicator (KPI) monitoring (KPIMON) of E2 service model, an O-RAN non-stand alone mode in a multi-connectivity operation using E-UTRA and NR radio access technology is considered, and it is assumed that the E2 node is in an O-RAN stand alone mode.

Referring to FIG. 2B, in a deployment of the O-RAN non-stand alone mode, the eNB is connected to the EPC through an S 1-C/S1-U interface and to the O-CU-CP through an X2 interface. For a deployment of the O-RAN standalone mode, the O-CU-CP may be connected to a 5G core (5GC) through an N2/N3 interface.

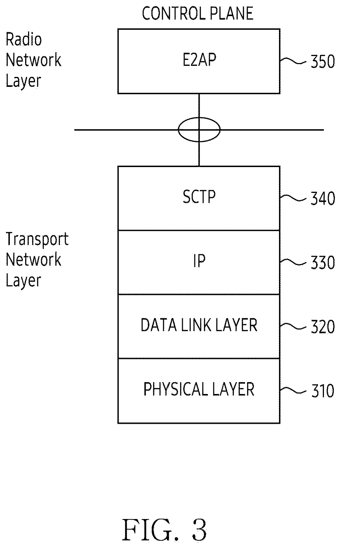

FIG. 3 illustrates a protocol stack of an E2 application protocol message in a wireless access network according to embodiments. Referring to FIG. 3, a control plane includes a transport network layer and a radio network layer. The transport network layer includes a physical layer 310, a data link layer 320, an internet protocol (IP) 330, and a stream control transmission protocol (SCTP) 340.

The wireless network layer includes E2AP 350. The E2AP 350 is used to transmit a subscription message, an indication message, a control message, a service update message, and a service query message, and they are transmitted in a higher layer of the SCTP 340 and the IP 330.

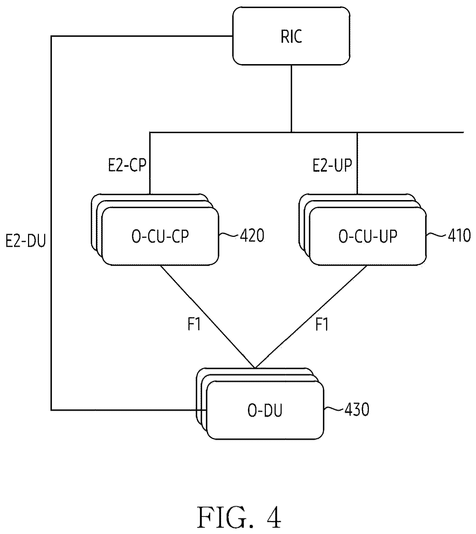

FIG. 4 illustrates an example of a connection between a base station and a radio access network intelligence controller (RIC) in a wireless access network according to embodiments.

Referring to FIG. 4, an RIC 440 is connected to O-CU-CP 420, O-CU-UP 410, and O-DU 430. The RIC 440 is a device for customizing RAN functionality for new services or regional resource optimization. The RIC 440 may provide functions such as network intelligence (e.g., policy enforcement, handover optimization), resource assurance (e.g., radio-link management, advanced self-organized-network (SON)), and resource control (e.g., load balancing, slicing policy). The RIC 440 may perform communication with O-CU-CP 420, O-CU-UP 410, O-DU 430. The RIC 440 may be connected to each node through E2-CP, E2-UP, E2-DU interfaces. In addition, an interface between O-CU-CP and DU, and between O-CU-UP and DU may be referred to as F1 interface. In the following description, DU and O-DU, CU-CP and O-CU-CP, CU-UP and O-CU-UP may be used interchangeably.

FIG. 4 illustrates one RIC 440, but a plurality of RICs may be present in various embodiments. The plurality of RICs may be implemented with a plurality of hardware located at the same physical location or may be implemented through virtualization using one hardware.

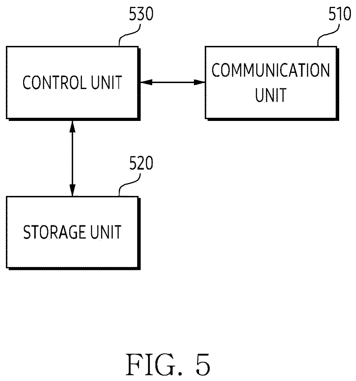

FIG. 5 illustrates a configuration of a device in a wireless access network according to embodiments. A structure exemplified in FIG. 5 may be understood as a configuration of a device having a function of at least one among the near-RT RIC, non-RT RIC, O-CU-CP, O-CU-UP, and O-DU of FIG. 5. The terms ' ...unit', '... device', and the like used below mean a unit processing at least one function or operation, and it may be implemented by hardware or software, or a combination of hardware and software.

Referring to FIG. 5, a core network device is configured to include a communication unit 510, a storage unit 520, and a control unit 530.

The communication unit 510 provides an interface for performing communication with other devices in a network. That is, the communication unit 510 converts a bit stream transmitted from the core network device to another device into a physical signal, and converts a physical signal received from another device into a bit stream. That is, the communication unit 510 may transmit and receive a signal. Accordingly, the communication unit 510 may be referred to as a modem, a transmit unit, a receive unit, or a transmit/receive unit. In this case, the communication unit 510 enables the core network device to communicate with other devices or systems via a backhaul connection (e.g., a wired backhaul or a wireless backhaul) or via a network. The communication unit 510 may include one or more transceivers.

The storage unit 520 stores data such as a basic program, an application program, and setting information for operations of the core network device. The storage unit 520 may be composed of a volatile memory, a nonvolatile memory, or a combination of a volatile memory and a nonvolatile memory. In addition, the storage unit 520 provides stored data according to a request of the control unit 530.

The control unit 530 controls overall operations of the core network device. For example, the control unit 530 transmits and receives signals through the communication unit 510. In addition, the control unit 530 records and reads data in the storage unit 520. To this end, the control unit 530 may include at least one processor. According to various embodiments, the control unit 530 may control the device to perform operations according to various embodiments described in the present disclosure.

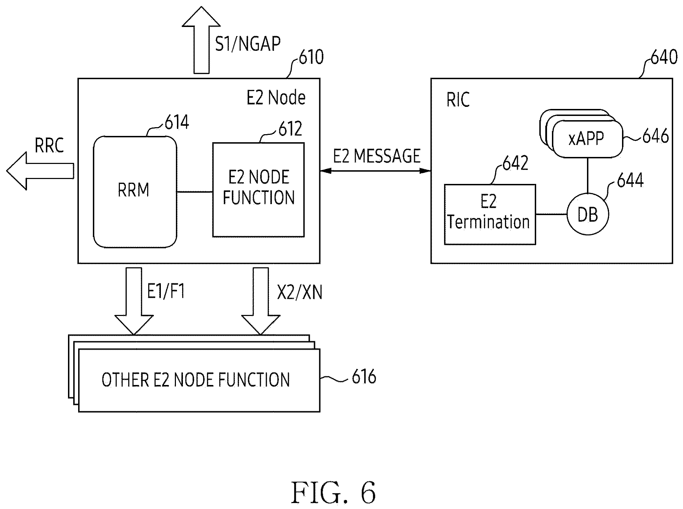

FIG. 6 illustrates a logical function related to an E2 message of an E2 node and an RIC in a wireless access network according to embodiments.

Referring to FIG. 6, an RIC 640 and an E2 node 610 may transmit or receive an E2 message between each other. For example, the E2 node 610 may be O-CU-CP, O-CU-UP, O-DU, or a base station. A communication interface of the E2 node may be determined according to a type of the E2 node 610. For example, the E2 node 610 may communicate with another E2 node 616 through an E1 interface or an F1 interface. In addition, for example, the E2 node 610 may communicate with the E2 node 616 through an X2 interface or an XN interface. In addition, for example, the E2 node 610 may perform communication through an S1 interface or a next generation application protocol (NGAP) interface (i.e., an interface between a next generation (NG) RAN node and the AMF).

The E2 node 610 may include an E2 node function 612. The E2 node function 612 is a function corresponding to a specific application S/W (xApp) 646 installed in the RIC 640. For example, in a case of a KPI monitor, a KPI monitor collection S/W is installed in the RIC 640, and the E2 node 610 may include an E2 node function 612 that generates KPI parameters and then transmits an E2 message including the KPI parameter to an E2 termination 642 located in the RIC 640. The E2 node 610 may include a radio resource management (RRM) 614. The E2 node 610 may manage resources provided to a wireless network for a terminal.

The E2 termination 642 located in the RIC 640 is a termination of the RIC 640 for the E2 message, and performs a function of interpreting the E2 message transmitted by the E2 node 610 and then transmitting it to the xApp 646. A database DB 644 located in the RIC 640 may be used for the E2 termination 624 or the xApp 616. The E2 node 610 illustrated in FIG. 6 is a termination of at least one interface and may be understood as a termination of messages transmitted to a terminal, a peripheral base station, and a core network.

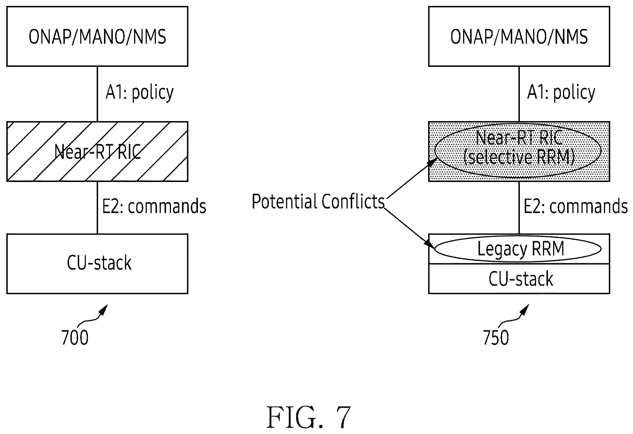

FIG. 7 illustrates examples of a function split between an E2 node and an RIC according to embodiments. O-RAN standard provides a function split between an E2 node and an RIC. For example, the E2 node may be a CU. The RIC may be a Near RT RIC. The RIC may be connected to open network automation platform (ONAP)/management and orchestration (MANO)/network management system (NMS) through the A1 interface. The RIC may be connected to the E2 node through an E2 interface. The E2 interface may transmit commands. A function split option may include a function split 700 that manages the entire radio resource management (RRM) in the near-RT RIC and a function split 750 that selectively manages the RRM in the near-RT RIC.

According to the WG3 decision of the meeting on 2019/01/16, the Near-RT RIC is expected to support an E2 as an open logical interface aimed at a multi-vendor environment, regardless of the implementation of a specific RRC-RRM algorithm located in the Near-RT RIC. In the present disclosure, E2 Service Model Radio Interface Control (E2SM-RIC), which is paired with E2SM-NI capable of performing injection/modification/configuration of Per UE RRC messages for each I/F and network entity (NE), may be proposed. In other words, in the function split 750, the Near-RT RIC may be gradually improved in a direction of the function split 700. The E2 may evolve into an open logical interface, which is independent of the implementation of a specific RRC-RRM algorithm in the Near-RT RIC while targeting a multi-vendor environment.

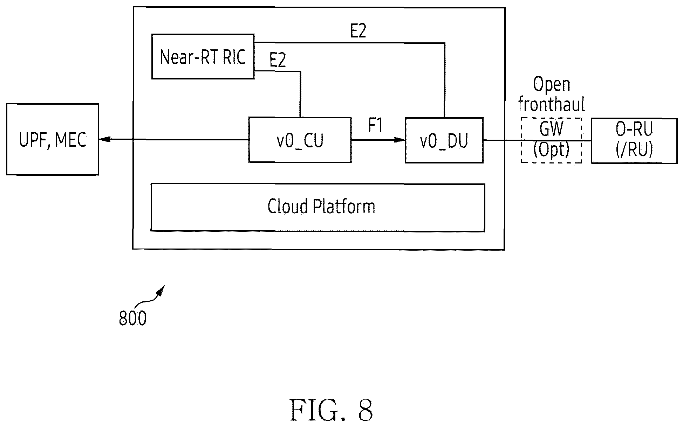

FIG. 8 illustrates an implementation example of an E2 node and an RIC according to embodiments. In a scenario of an implementation example 800, an E2 node (e.g., O-DU, O-CU) and an RIC may be virtualized on a cloud platform (e.g., an open chassis and blade specification edge cloud) and configured on a device (e.g., a server). Such a scenario may support a deployment in dense urban areas with abundant fronthaul capacity that allows a BBU function to be pooled at a central location, with low latency enough to meet O-DU latency requirements. Therefore, there may be no need to attempt to centralize the Near-RT RIC beyond the limit of centralizing O-DU function. According to an embodiment, E2SM-RIC may be optimized for an O-RAN deployment scenario in which Near-RT RIC, O-CU, and O-DU are implemented on an O-Cloud platform.

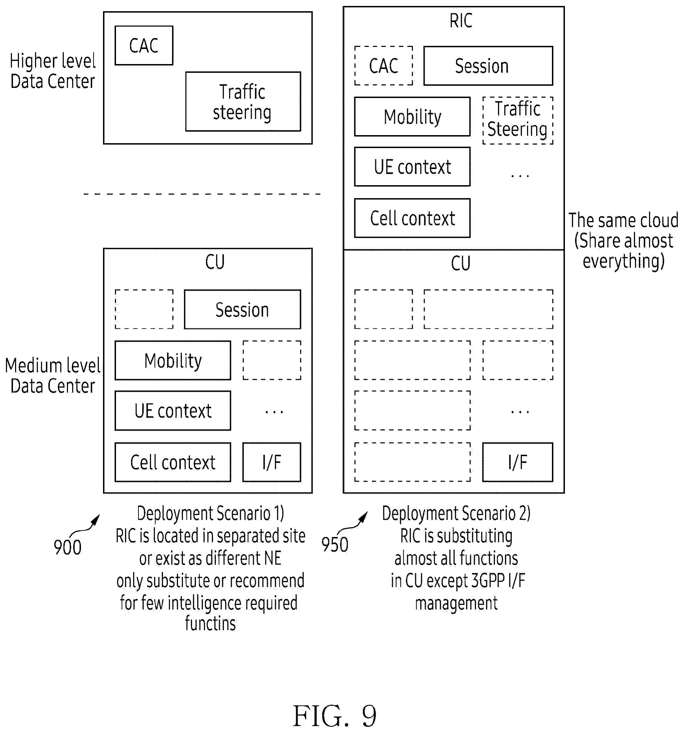

FIG. 9 illustrates examples of function split between a centralized unit (CU) and an RIC according to embodiments. Referring to FIG. 9, function splits may be performed according to a deployment scenario #1 900 or a function deployment scenario #2 950.

The deployment scenario #1 900: RIC is located at a separate site or exists only as another NE, replacing or recommending some intelligence critical functions.

The deployment scenario #2 950: RIC may replace almost all functions of the CU except 3GPP I/F management.

In FIG. 9, two scenarios are illustrated, but other scenarios may be applied. As an example, in the deployment scenario #1 900, a Mobility function may be performed by the RIC rather than the CU. In addition, as an example, in the deployment scenario #1 900, a UE context function may be performed by the RIC rather than the CU. In addition, as an example, in the deployment scenario #1 900, a session setup function may be performed by the RIC rather than the CU.

The present disclosure relates to an electronic device and a method for controlling an E2 node by an RIC in a radio access network. The present disclosure provides an electronic device and a method for controlling an E2 node through an E2 message following an open radio access network (O-RAN) standard of a wireless communication system.

In addition, the present disclosure provides an electronic device and a method for transmitting, to a radio access network (RAN) intelligent controller (RIC) in a wireless communication system, a message format and/or an information element (IE) to enable subscription to a plurality of services in a service subscription procedure of an O-RAN E2 application protocol (E2AP) of an E2 node.

A device and a method according to embodiments of the present disclosure enable subscription to a plurality of services in one subscription procedure, as a radio access network (RAN) intelligent controller (RIC) transmits a subscription request message in a message format including one or more radio access network (RAN) functions and/or one or more event trigger definitions to an E2 node in a wireless communication system.

The effects that can be obtained from the present disclosure are not limited to those described above, and any other effects not mentioned herein will be clearly understood by those having ordinary knowledge in the art to which the present disclosure belongs, from the following description.

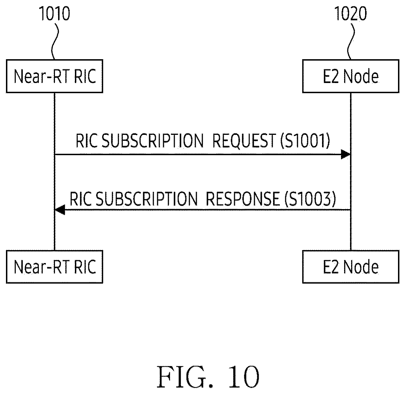

FIG. 10 illustrates an example of a subscription procedure of an E2 node and an RIC according to embodiments. An RIC subscription procedure may be used to establish E2 subscriptions consisting of an event trigger and a sequence of actions. The O-RAN Working Group (WG) 3 Near-Real-time RAN Intelligent Controller Architecture & E2 General Aspects and Principles (E2GAP) standard defines the Near-RT RIC as a service consumer and the E2 node as a service producer. The Near-RT RIC may perform an RIC subscription procedure to receive service. The standard stipulates that the Near-RT RIC transmits an RIC subscription request message for the RIC subscription procedure. A Near-RT RIC 1010 exemplifies an RIC (e.g., the RIC 640) described through FIGS. 1 to 9. An E2 node 1020 exemplifies an E2 node (e.g., the E2 node 610) described through FIGS. 1 to 9.

Referring to FIG. 10, in operation S1001, the Near-RT RIC 1010 may transmit an RIC subscription request message (e.g., an RIC SUBSCRIPTION REQUEST message) to the E2 node 1020. The RIC subscription request message may include information on a RAN function.

In operation S1003, the E2 node 1020 may transmit an RIC subscription response message (e.g., an RIC SUBSCRIPTION RESPONSE message) to the Near-RT RIC 1010. If there is no error in the RIC subscription request message and the RAN function of the RIC subscription request message is supportable, the E2 node 1020 may transmit an RIC subscription response message to the Near-RT RIC 1010.

Although not illustrated in FIG. 10, if the E2 node 1020 does not allow at least one requested action, or detects an inconsistency in the sequence of actions and/or action definitions, or a failure occurs during the RIC subscription procedure, the E2 node 1020 may transmit an RIC subscription failure message (e.g., an RIC SUBSCRIPTION FAILURE message) to the Near-RT RIC 1010.

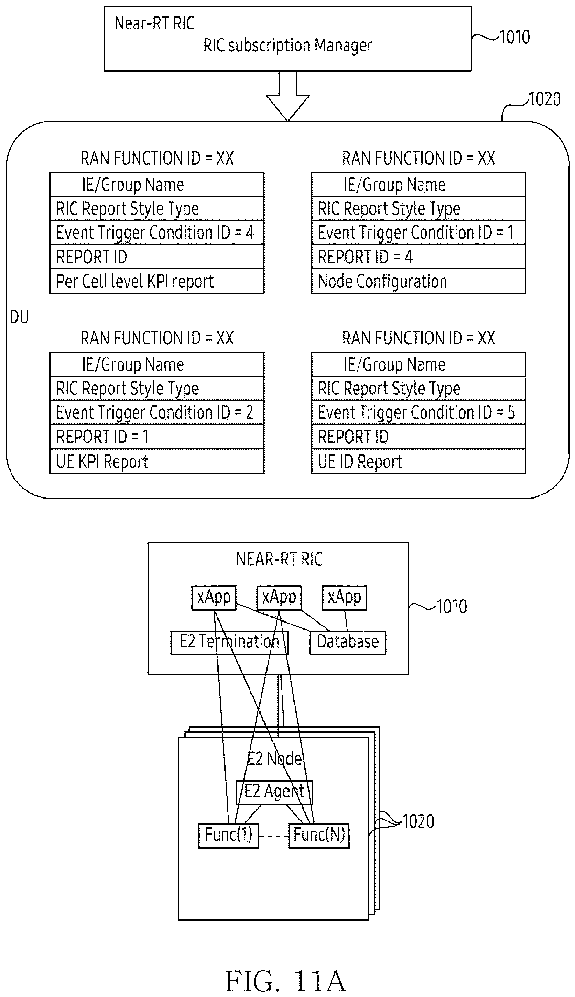

FIG. 11A illustrates an example of mapping between an application and a radio access network (RAN) function according to an embodiment.

Referring to FIG. 11A, a Near-RT RIC (e.g., the Near-RT RIC 1010) may include an RIC subscription manager. An E2 node (e.g., the E2 node 1020) may include a DU. A service refers to a service provided by the E2 node 1020 to provide access to messages and measurement and to control the E2 node 1020 from the Near-RT RIC 1010. A RAN Function refers to a specific function in the E2 node. For example, the RAN function may include X2AP, F1AP, E1AP, S1AP, NGAP interfaces for handling UEs and/or cells and RAN internal functions. An xApp is an application designed to be executed in the Near-RT RIC 1010. Such an application is likely to be composed of one or more microservices and may identify what data it consumes and provides at the time of onboarding. The application is independent of the Near-RT RIC 1010 and may be provided by a third party. The E2 interface enables a direct connection between the xApp and RAN functionality.

A plurality of RAN functions may be used to perform one service. For example, one of the plurality of RAN functions may include cell level KPI report. As an example, an event trigger definition ID may be '4'. For example, one of the plurality of RAN functions may include a node configuration. As an example, the event trigger definition ID may be '1'. For example, one of the plurality of RAN functions may include UE KPI report. As an example, the event trigger definition ID may be '2'. For example, one of the plurality of RAN functions may include UE ID report. As an example, the event trigger definition ID may be '5'.

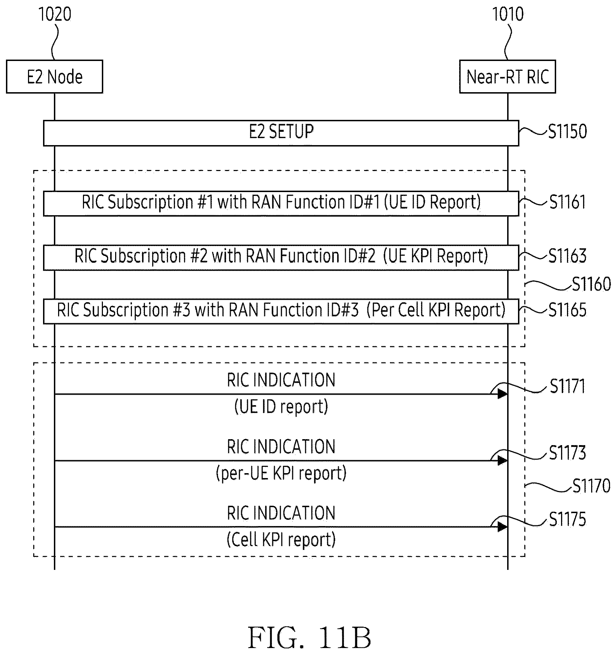

FIG. 11B illustrates examples of a plurality of subscription procedures of an E2 node and an RIC for a service. In FIG. 11B, the UE ID report, the UE KPI report, and the cell level KPI report among the RAN functions mentioned in FIG. 11A may be used for a service.

Referring to FIG. 11B, in a procedure S1150, a Near-RT RIC (e.g., the Near-RT RIC 1010) may perform an E2 setup procedure with an E2 node (e.g., the E2 node 1020). The purpose of the E2 setup procedure is to establish a signaling connection between the E2 node 1020 and the Near-RT RIC 1010. The E2 setup procedure may delete existing application level configuration data between two nodes, and replace the data with received data. The E2 node 1020 may transmit an E2 setup request message (e.g., a SETUP REQUEST message) to the Near-RT RIC 1010. The Near-RT RIC 1010 may transmit an E2 setup response message (e.g., a SETUP RESPONSE message) to the E2 node 1020.

The E2 setup request message of the E2 Setup procedure may include RAN function IDs. The E2 setup request message may include a RAN function definition corresponding to the RAN function ID corresponding to each the RAN function ID. The RAN function definition may include a description of the RAN function. The RAN function may be specific to an E2 service model. Subsequently, in the procedure, the RAN function may be indicated via the RAN Function ID.

After the E2 setup procedure, a subscription procedure S1160 may be performed for service provision. The service may request UE ID report, UE KPI report, and cell level KPI report. The Near-RT RIC 1010 may request subscriptions to three services ("UE ID report" service, "UE KPI report" service, and "cell level KPI report" service) from the E2 node 1020. That is, for the above-described functions, the Near-RT RIC 1010 may require three subscription procedures (S1161, S1163, S1165) with the E2 node 1020. Each message for service subscriptions may include a RAN function and an event trigger definition related to the RAN function, as shown in the table below.

**[Table 1]**

| **IE/Group Name** | | | **Presence** | **Range** | **IE type and reference** | **Semantics descriptio n** | **Criticality** | **Assigned Criticality** |
|---|---|---|---|---|---|---|---|---|
| Message Type | | | M | | 9.2.3 | | YES | reject |
| RIC Request ID | | | M | | 9.2.7 | | YES | reject |
| RAN Function ID | | | M | | 9.2.8 | | YES | reject |
| RIC Subscription Details | | | M | | | | YES | reject |
| | >RIC Event Trigger Definition | | M | | 9.2.9 | | - | |
| | >Sequence of Actions | | | 1.. <maxofRIC actionlD> | | | EACH | ignore |
| | | >>RIC Action ID | M | | 9.2.10 | | - | |
| | | >>RIC Action Type | M | | 9.2.11 | | - | |
| | | >>RIC Action Definition | ○ | | 9.2.12 | | - | |
| | | >>RIC Subsequent Action | ○ | | 9.2.13 | | - | |

In the first subscription procedure S1161, the Near-RT RIC 1010 may transmit an RIC subscription request message to the E2 node 1020. Afterwards, the E2 node 1020 may transmit an RIC subscription response message to the Near-RT RIC 1010. After the first subscription procedure S1161, in operation S1171, a first RIC indication of reporting procedure S1170 may be performed. The E2 node 1020 may transmit an RIC indication message including a UE ID report to the Near-RT RIC 1010.

In a second subscription procedure S1163, the Near-RT RIC 1010 may transmit an RIC subscription request message to the E2 node 1020. Afterwards, the E2 node 1020 may transmit an RIC subscription response message to the Near-RT RIC 1010. After the second subscription procedure S1163, in an operation S1173, a second RIC indication of reporting procedure S1170 may be performed. The E2 node 1020 may transmit an RIC indication message including a UE KPI report to the Near-RT RIC 1010.

In a third subscription procedure S1165, the Near-RT RIC 1010 may transmit an RIC subscription request message to the E2 node 1020. Afterwards, the E2 node 1020 may transmit an RIC subscription response message to the Near-RT RIC 1010. After the third subscription procedure S1165, in operation S1175, a third RIC indication of reporting procedure S1170 may be performed. The E2 node 1020 may transmit an RIC indication message including cell level KPI report to the Near-RT RIC 1010.

As shown in Table 1, a format of an RIC subscription request message (e.g., RIC SUBSCRIPTION REQUEST message) includes one RAN Function ID information element (IE) and one RIC Event Trigger Definition IE. Therefore, in case of executing a plurality of functions related to a specific service, the Near-RT RIC 1010 has a problem of having to perform individual subscription procedures for each function. As the number of plurality of functions increases, the number of subscription procedures increases. Since one subscription procedure includes a request and a response, overflow occurs. The overflow causes a delay in service provision between the Near-RT RIC 1010 and the E2 node 1020.

In order to solve the above-described problems, embodiments of the present disclosure propose a format of an RIC subscription request message capable of supporting a plurality of RAN functions and/or a plurality of event trigger definitions. Herein, supporting the plurality of RAN functions and/or the plurality of event trigger definitions means that a format of IE in the RIC subscription request message is configured to include a plurality of items. Therefore, the RIC subscription request message according to embodiments of the present disclosure should not be interpreted as necessarily including a plurality of RAN function IDs and/or a plurality of event trigger definitions.

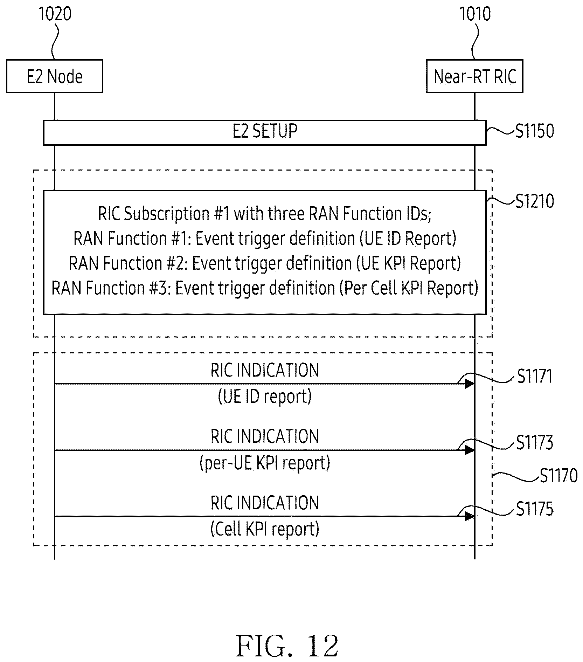

FIG. 12 illustrates an example of a subscription procedure for supporting multiple RAN functions according to an embodiment. In FIG. 12, a subscription procedure using a single RIC subscription request message having a list format for an RAN Function ID IE is described in an RIC subscription request procedure according to embodiments of the present disclosure.

Referring to FIG. 12, in a procedure S1150, a Near-RT RIC (e.g., the Near-RT RIC 1010) may perform an E2 setup procedure with an E2 node (e.g., the E2 node 1020). The E2 node 1020 may transmit an E2 setup request message (e.g., SETUP REQUEST message) to the Near-RT RIC 1010. The Near-RT RIC 1010 may transmit an E2 setup response message (e.g., SETUP RESPONSE message) to the E2 node 1020. FIG. 11B may be referred to in a description of the E2 setup procedure.

After the E2 setup procedure, a subscription procedure S1210 may be performed for service provision. The service may request UE ID report, UE KPI report, and cell level KPI report. The Near-RT RIC 1010 may perform subscription to three services through one subscription procedure S1210. The Near-RT RIC 1010 may transmit an RIC subscription request message to the E2 node 1020. Afterwards, the E2 node 1020 may transmit an RIC subscription response message to the Near-RT RIC 1010. After the subscription procedure S1210, a reporting procedure S1170 may be performed. In operation S1171, the E2 node 1020 may transmit an RIC indication message including a UE ID report to the Near-RT RIC 1010. In operation S1173, the E2 node 1020 may transmit an RIC indication message including a UE KPI report to the Near-RT RIC 1010. In operation S1175, the E2 node 1020 may transmit an RIC indication message including a cell-level KPI report to the Near-RT RIC 1010.

The RIC subscription request message according to an embodiment may have a message structure for providing a plurality of RAN functions. For example, the message structure is as shown in the table below.

**[Table 2]**

| IE/Group Name | Presence | Range | IE type and reference | Semantics description | Criticality | Assigned Criticality |
|---|---|---|---|---|---|---|
| Message Type | M | | 9.2.3 | | YES | reject |
| RIC Request ID | M | | 9.2.7 | | YES | reject |
| RAN Function List | | 1..<maxofRANFunctionID> | | | | |
| > RAN Function ID | M | | 9.2.8 | | YES | reject |
| > RIC Subscription Details | M | | | | YES | reject |
| >>RIC Event Trigger Definition | M | | 9.2.9 | | - | |
| >>Sequence of Actions | | 1.. <maxofRICactionID> | | | EACH | ignore |
| >>>RIC Action ID | M | | 9.2.10 | | - | |
| >>>RIC Action Type | M | | 9.2.11 | | - | |
| >>>RIC Action Definition | O | | 9.2.12 | | - | |
| >>>RIC Subsequent Action | O | | 9.2.13 | | - | |

According to an embodiment, one or more RAN Function IDs may be configured in a list format. A message structure of an RIC subscription request message using the 'RAN Function List' IE may be configured such that a plurality of RAN Function ID IEs are included in one RIC subscription request message. In addition, one event trigger definition IE may be associated with one RAN Function ID IE. That is, one event trigger definition may be mapped to one RAN Function ID. The RIC subscription request message including the 'RAN Function List' IE may be configured such that a plurality of Event Trigger Definition IEs are included in one RIC subscription request message.

The RIC subscription response message according to an embodiment may include an admitted list. The admitted list may include at least one RAN Function ID admitted by the E2 node among one or more RAN Function IDs of the RIC subscription request message. On the other hand, in an additional embodiment, the RIC subscription response message may include an unadmitted list. The unadmitted list may include at least one RAN Function ID not admitted by the E2 node among one or more RAN Function IDs of the RIC subscription request message. For example, a message structure of the RIC subscription response message is as shown in the table below.

**[Table 3]**

| IE/Group Name | Presence | Range | IE type and reference | Semantics description | Criticality | Assigned Criticality |
|---|---|---|---|---|---|---|
| Message Type | M | | 9.2.3 | | YES | reject |
| RIC Request ID | M | | 9.2.7 | | YES | reject |
| RAN Function Admitted List | | 1..<maxofRANFunctionID> | | | | |
| > RAN Function ID | M | | 9.2.8 | | YES | reject |
| > RIC Actions Admitted List | | 1.. <maxofRICactionID> | | | YES | reject |
| >>RIC Action ID | M | | 9.2.10 | | - | |
| >RIC Actions Not Admitted List | | 0.. <maxofRICactionID> | | | YES | reject |
| >>RIC Action ID | M | | 9.2.10 | | - | |
| >>Cause | M | | 9.2.1 | | - | |
| RAN Function Not Admitted List | | 0..<maxofRANFunctionID> | | | | |

According to an embodiment, the E2 node 1020 may obtain RAN Function IDs of the RIC subscription request message from the Near-RT RIC 1010. The E2 node 1020 may identify whether to admit a RAN function corresponding to each RAN Function ID. The E2 node 1020 may transmit, to the Near-RT RIC 1010, an RIC subscription response message including a list (e.g., RAN Function Admitted list IE) including at least one admitted RAN Function ID. In some embodiments, the RIC subscription response message may also include a list (e.g., RAN Function not admitted list IE) including at least one unadmitted RAN Function ID.

For example, as illustrated in FIG. 11A, each Event Trigger Definition may include an Event Trigger Condition ID and a REPORT ID. Event Trigger Condition IDs may be mapped to each RAN function. In order to consume services corresponding to a plurality of Event Trigger Conditions (e.g., Event Trigger Condition IDs having '1', '2', '4', '5') through one subscription procedure, the E2 node may include a RAN function corresponding to each Event Trigger Condition in a RAN function list (e.g., RAN Function List).

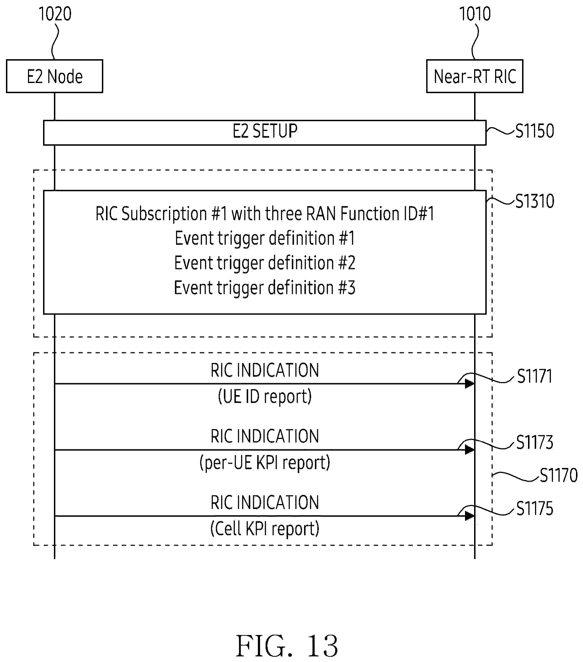

FIG. 13 illustrates an example of a subscription procedure for supporting multiple event trigger definitions according to an embodiment. In FIG. 13, a subscription procedure using a single RIC subscription request message having a list format so that a plurality of Event Trigger Definition IEs for a RAN Function of an RIC subscription request message according to embodiments of the present disclosure are included in the RIC subscription request message is described.

Referring to FIG. 13, in a procedure S1150, a Near-RT RIC (e.g., the Near-RT RIC 1010) may perform an E2 setup procedure with an E2 node (e.g., the E2 node 1020). The E2 node 1020 may transmit an E2 setup request message (e.g., SETUP REQUEST message) to the Near-RT RIC 1010. The Near-RT RIC 1010 may transmit an E2 setup response message (e.g., SETUP RESPONSE message) to the E2 node 1020. FIG. 11B may be referred to in a description of the E2 setup procedure.

After the E2 setup procedure, a subscription procedure S1310 may be performed for service provision. For example, a RAN Function may be defined as "SLA Assurance". A plurality of event trigger definitions may be mapped to one RAN Function. The plurality of event trigger definitions may include "UE ID report", "per-UE KPI report" and "Cell KPI report". The Near-RT RIC 1010 may perform subscription to three services through one subscription procedure S1310. The Near-RT RIC 1010 may transmit an RIC subscription request message to the E2 node 1020. Afterwards, the E2 node 1020 may transmit an RIC subscription response message to the Near-RT RIC 1010. After a subscription procedure S1400, the reporting procedure S1170 may be performed. In operation S1171, the E2 node 1020 may transmit an RIC indication message including a UE ID report to the Near-RT RIC 1010. In operation S1173, the E2 node 1020 may transmit an RIC indication message including a UE KPI report to the Near-RT RIC 1010. In operation S1175, the E2 node 1020 may transmit an RIC indication message including a cell-level KPI report to the Near-RT RIC 1010.

An RIC subscription request message according to an embodiment may have a message structure for providing a plurality of event trigger definitions. For example, the message structure is as shown in the table below.

**[Table 4]**

| IE/Group Name | Presence | Range | IE type and reference | Semantics description | Criticality | Assigned Criticality |
|---|---|---|---|---|---|---|
| Message Type | M | | 9.2.3 | | YES | reject |
| RIC Request ID | M | | 9.2.7 | | YES | reject |
| RAN Function ID | M | | 9.2.8 | | YES | reject |
| RIC Subscription Details | M | | | | YES | reject |
| >RIC Event Trigger Definition List | | 1..<maxnoofRICStyles> | | | | |
| >>RIC Event Trigger Definition | M | | 9.2.9 | | - | |
| >>Sequence of Actions | | 1.. <maxofRICactionID> | | | EACH | ignore |
| >>>RIC Action ID | M | | 9.2.10 | | - | |
| >>>RIC Action Type | M | | 9.2.11 | | - | |
| >>>RIC Action Definition | O | | 9.2.12 | | - | |
| >>>RIC Subsequent Action | O | | 9.2.13 | | - | |

According to an embodiment, one or more Event Trigger Definitions may be configured in a list format. One or more Event Trigger Definition IEs (e.g., at least two Event Trigger Definition IEs) may be associated with one RAN Function ID IE. That is, one or more Event Trigger Definitions may be mapped to one RAN Function ID. For the above-described mapping, the RIC subscription request message may include a 'RIC Event Trigger Definition List' IE.

An RIC subscription response message according to an embodiment may include an admitted list. The admitted list may include at least one Event Trigger Definition admitted by the E2 node among one or more Event Trigger Definitions of the RIC subscription request message. On the other hand, in an additional embodiment, the RIC subscription response message may include an unadmitted list. The unadmitted list may include at least one Event Trigger Definition not admitted by the E2 node among one or more Event Trigger Definitions of the RIC subscription request message. For example, a message structure of the RIC subscription response message is as shown in the table below.

**[Table 5]**

| IE/Group Name | Presence | Range | IE type and reference | Semantics description | Criticality | Assigned Criticality |
|---|---|---|---|---|---|---|
| Message Type | M | | 9.2.3 | | YES | reject |
| RIC Request ID | M | | 9.2.7 | | YES | reject |
| RAN Function ID | M | | 9.2.8 | | YES | reject |
| RIC Event Trigger Definition Admitted List | | 1..<maxnoofRICStyles> | | | | |
| >RIC Event Trigger Definition | M | | 9.2.9 | | | |
| >RIC Actions Admitted List | | 1.. <maxofRICactionID> | | | YES | reject |
| >>RIC Action ID | M | | 9.2.10 | | - | |
| >RIC Actions Not Admitted List | | 0.. <maxofRICactionID> | | | YES | reject |
| >>RIC Action ID | M | | 9.2.10 | | - | |
| >>Cause | M | | 9.2.1 | | - | |
| RIC Event Trigger Definition Not Admitted List | | 0..<maxnoofRICStyles> | | | | |
| >RIC Event Trigger Definition | M | | 9.2.9 | | | |

In FIG. 12, an RIC subscription request message including a RAN Function list IE for receiving a plurality of RAN Function IDs is described. In FIG. 13, an RIC subscription request message including an Event Trigger Definition list IE for receiving a plurality of Event Trigger Definitions is described. An Event Trigger Definition may be associated with one or more services provided according to an RIC service style type within a RAN Function. Accordingly, the message format (e.g., Table 2 and Table 3) of FIG. 12 and the message format (e.g., Table 4 and Table 5) of FIG. 13 may be combined.

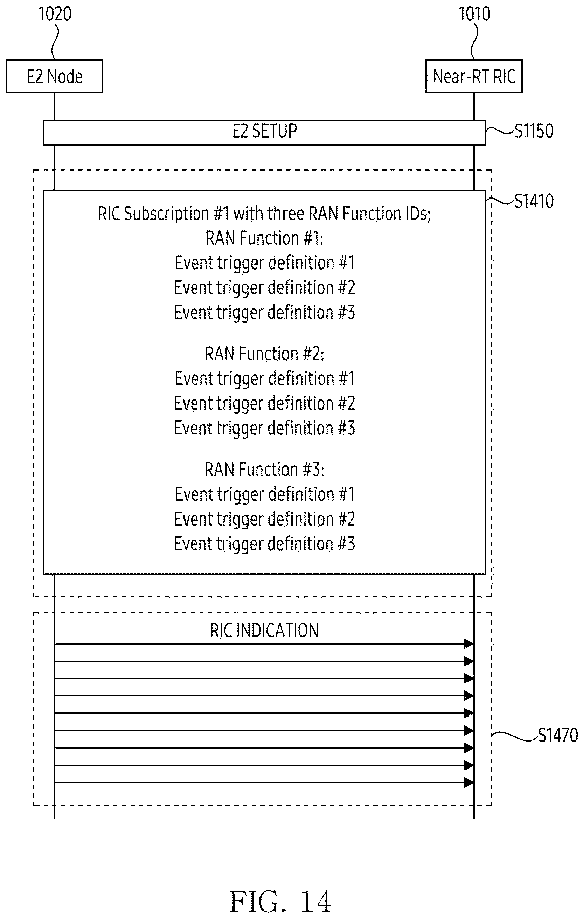

FIG. 14 illustrates an example of a subscription procedure for supporting multiple RAN functions and multiple event trigger definitions according to an embodiment. In FIG. 14, a subscription procedure for providing an E2 node with a plurality of RAN Function IDs and a plurality of Event trigger definitions according to embodiments of the present disclosure via a single RIC subscription request message is described.

Referring to FIG. 14, in procedure S1150, a Near-RT RIC (e.g., the Near-RT RIC 1010) may perform an E2 setup procedure with an E2 node (e.g., the E2 node 1020). The E2 node 1020 may transmit an E2 setup request message (e.g., SETUP REQUEST message) to the Near-RT RIC 1010. The Near-RT RIC 1010 may transmit an E2 setup response message (e.g., SETUP RESPONSE message) to the E2 node 1020. FIG. 11B may be referred to in a description of the E2 setup procedure.

After the E2 setup procedure, a subscription procedure S1410 may be performed for service provision. A plurality of RAN Functions may be required for a specific service. In addition, in each RAN Function, definition of one or more Event Trigger Definitions according to the RIC service style type may be required. The Near-RT RIC 1010 may perform subscription to a plurality of services through one subscription procedure S1410. The Near-RT RIC 1010 may transmit an RIC subscription request message to the E2 node 1020. Afterwards, the E2 node 1020 may transmit an RIC subscription response message to the Near-RT RIC 1010. After the subscription procedure S1410, a reporting procedure S1470 may be performed. The E2 node 1020 may perform an RIC service corresponding to each Event Trigger Definition of RAN function corresponding to each RAN Function ID. For example, in the reporting procedure S1470, the E2 node 1020 may transmit an RIC indication message corresponding to each Event Trigger Definition to the Near-RT RIC 1010.

For example, a message structure of the RIC subscription request message is as shown in the table below.

**[Table 6]**

| IE/Group Name | Presence | Range | IE type and reference | Semantics description | Criticality | Assigned Criticality |
|---|---|---|---|---|---|---|
| Message Type | M | | 9.2.3 | | YES | reject |
| RIC Request ID | M | | 9.2.7 | | YES | reject |
| RAN Function List | | 1..<maxofRANFunctionID> | | | | |
| > RAN Function ID | M | | 9.2.8 | | YES | reject |
| > RIC Subscription Details | M | | | | YES | reject |
| >>RIC Event Trigger Definition List | | 1..<maxnoofRICStyles> | | | | |
| >>>RIC Event Trigger Definition | M | | 9.2.9 | | - | |
| >>>Sequence of Actions | | 1.. <maxofRICactionID> | | | EACH | ignore |
| >>>>RIC Action ID | M | | 9.2.10 | | - | |
| >>>>RIC Action Type | M | | 9.2.11 | | - | |
| >>>>RIC Action Definition | O | | 9.2.12 | | - | |
| >>>>RIC Subsequent Action | O | | 9.2.13 | | - | |

For example, a message structure of the RIC subscription response message is as shown in the table below.

**[Table 7]**

| IE/Group Name | Presence | Range | IE type and reference | Semantics description | Criticality | Assigned Criticality |
|---|---|---|---|---|---|---|
| Message Type | M | | 9.2.3 | | YES | reject |
| RIC Request ID | M | | 9.2.7 | | YES | reject |
| RAN Function Admitted List | | 1..<maxofRANFunctionID> | | | | |
| > RAN Function ID | M | | 9.2.8 | | YES | reject |
| >RIC Event Trigger Definition Admitted List | | 1..<maxnoofRICStyles> | | | | |
| >>RIC Event Trigger Definition | M | | 9.2.9 | | | |
| >>RIC Actions Admitted List | | 1.. <maxofRICactionID> | | | YES | reject |
| >>>RIC Action ID | M | | 9.2.10 | | - | |
| >>RIC Actions Not Admitted List | | 0.. <maxofRICactionID> | | | YES | reject |
| >>>RIC Action ID | M | | 9.2.10 | | - | |
| >>>Cause | M | | 9.2.1 | | - | |
| >RIC Event Trigger Definition Not Admitted List | | 0..<maxnoofRICStyles> | | | | |
| >>RIC Event Trigger Definition | M | | 9.2.9 | | | |
| RAN Function Not Admitted List | | 0..<maxofRANFunctionID> | | | | |
| > RAN Function ID | M | | 9.2.8 | | YES | reject |

The section numbers in Tables 1 to 7 described above may refer to O-RAN Near-Real-time RAN Intelligent Controller, E2 Application Protocol (E2AP) standard (e.g., version 2.02).

In the above-described embodiments, examples of method of optimizing a transmission of an E2 subscription request message so that a plurality of RAN functions and a plurality of Event trigger definitions may be transmitted to the E2 subscription request message is described, but the embodiments of the present disclosure are not limited thereto. In order to support the plurality of RAN Function IDs and/or the plurality of RIC Event Trigger Definitions, other messages (e.g., RIC Control Request messages) may be used.

In embodiments of the present disclosure, a method performed by an E2 node may comprising receiving, from a near-real time (Near-RT) radio access network (RAN) intelligent controller (RIC), an RIC subscription request message. The method may comprise transmitting, to the Near-RT RIC, an RIC subscription response message. The RIC subscription request message may include a RAN function list information element (IE) for indicating one or more RAN functions.

According to an embodiment, the RAN function list IE may include a RAN identifier (ID) corresponding to each RAN function, and information on one or more event trigger definition IEs corresponding to each RAN function.

According to an embodiment, the information on one or more event trigger definition IEs corresponding to each RAN function may be configured in a list format. The information on one or more event trigger definition IEs may be associated with one RAN function identifier (ID).

According to an embodiment, the RIC subscription response message may include an admitted list including at least one RAN function admitted by the E2 node among the one or more RAN functions.

In embodiments of the present disclosure, it may comprise receiving, from a near-real time (Near-RT) radio access network (RAN) intelligent controller (RIC), an RIC subscription request message. The method may comprise transmitting, to the Near-RT RIC, an RIC subscription response message. The RIC subscription request message may include a RAN function identifier (ID) for indicating a RAN function, and an event trigger definition list including one or more event trigger definition information elements (IEs) associated with the RAN function ID.

In embodiments of the present disclosure, a method performed by a near-real time (Near-RT) radio access network (RAN) intelligent controller (RIC) may comprise transmitting, to an E2 node, an RIC subscription request message. The method may comprise receiving, from the E2 node, an RIC subscription response message. The RIC subscription request message may include a RAN function list information element (IE) for indicating one or more RAN functions.

According to an embodiment, the RAN function list IE may include a RAN identifier (ID) corresponding to each RAN function, and information on one or more event trigger definition IEs corresponding to each RAN function.

According to an embodiment, the information on one or more event trigger definition IEs corresponding to each RAN function may be configured in a list format. The information on one or more event trigger definition IEs may be associated with one RAN function identifier (ID).

According to an embodiment, the RIC subscription response message may include an admitted list including at least one RAN function admitted by the E2 node among the one or more RAN functions.

In embodiments of the present disclosure, a method performed by a near-real time (Near-RT) radio access network (RAN) intelligent controller (RIC) may comprise transmitting, to an E2 node, an RIC subscription request message. It may comprise receiving, from the E2 node, an RIC subscription response message. The RIC subscription request message may include a RAN function identifier (ID) for indicating a RAN function, and an event trigger definition list including one or more event trigger definition information elements (IEs) associated with the RAN function ID.

In embodiments of the present disclosure, an apparatus performed by an E2 node may comprise at least one transceiver, and at least one processor coupled to the at least one transceiver. The at least one processor may be configured to receive, from a near-real time (Near-RT) radio access network (RAN) intelligent controller (RIC), an RIC subscription request message. The at least one processor may be configured to transmit, to the Near-RT RIC, an RIC subscription response message. The RIC subscription request message may include a RAN function list information element (IE) for indicating one or more RAN functions.

According to an embodiment, the RAN function list IE may include a RAN identifier (ID) corresponding to each RAN function, and information on one or more event trigger definition IEs corresponding to each RAN function.

According to an embodiment, the information on one or more event trigger definition IEs corresponding to each RAN function may be configured in a list format. The information on one or more event trigger definition IEs may be associated with one RAN function identifier (ID).

According to an embodiment, the RIC subscription response message may include an admitted list including at least one RAN function admitted by the E2 node among the one or more RAN functions.

In embodiments of the present disclosure, an apparatus performed by an E2 node may comprise at least one transceiver, and at least one processor coupled to the at least one transceiver. The at least one processor may be configured to receive, from a near-real time (Near-RT) radio access network (RAN) intelligent controller (RIC), an RIC subscription request message. The at least one processor may be configured to transmit, to the Near-RT RIC, an RIC subscription response message. The RIC subscription request message may include a RAN function identifier (ID) for indicating a RAN function, and an event trigger definition list including one or more event trigger definition information elements (IEs) associated with the RAN function ID.

In embodiments of the present disclosure, an apparatus performed by a near-real time (Near-RT) radio access network (RAN) intelligent controller (RIC) may comprise at least one transceiver, and at least one processor coupled to the at least one transceiver. The at least one processor may be configured to transmit, to an E2 node, an RIC subscription request message. The at least one processor may be configured to receive, from the E2 node, an RIC subscription response message. The RIC subscription request message may include a RAN function list information element (IE) for indicating one or more RAN functions.

According to an embodiment, the RAN function list IE may include a RAN identifier (ID) corresponding to each RAN function, and information on one or more event trigger definition IEs corresponding to each RAN function.

According to an embodiment, the information on one or more event trigger definition IEs corresponding to each RAN function may be configured in a list format. The information on one or more event trigger definition IEs may be associated with one RAN function identifier (ID).

According to an embodiment, the RIC subscription response message may include an admitted list including at least one RAN function admitted by the E2 node among the one or more RAN functions.

In embodiments of the present disclosure, an apparatus performed by a near-real time (Near-RT) radio access network (RAN) intelligent controller (RIC) may comprise at least one transceiver, and at least one processor coupled to the at least one transceiver. The at least one processor may be configured to transmit, to an E2 node, an RIC subscription request message. The at least one processor may be configured to receive, from the E2 node, an RIC subscription response message. The RIC subscription request message may include a RAN function identifier (ID) for indicating a RAN function, and an event trigger definition list including one or more event trigger definition information elements (IEs) associated with the RAN function ID.

In embodiments of the present disclosure, a non-transitory storage medium is provided. The non-transitory storage medium may comprise memory storing instructions. The instructions, when executed by at least one processor, may cause an E2 node to receive, from a near-real time (Near-RT) radio access network (RAN) intelligent controller (RIC), an RIC subscription request message, and transmit, to the Near-RT RIC, an RIC subscription response message. According to an embodiment, the RIC subscription request message may include a RAN function list information element (IE) for indicating one or more RAN functions. According to an embodiment, the RIC subscription request message may include a RAN function identifier (ID) for indicating a RAN function, and an event trigger definition list including one or more event trigger definition information elements (IEs) associated with the RAN function ID.

In embodiments of the present disclosure, a non-transitory storage medium is provided. The non-transitory storage medium may comprise memory storing instructions. The instructions, when executed by at least one processor, may cause a near-real time (Near-RT) radio access network (RAN) intelligent controller (RIC) to transmit, to an E2 node, an RIC subscription request message, and receive, from the E2 node, an RIC subscription response message. According to an embodiment, the RIC subscription request message may include a RAN function list information element (IE) for indicating one or more RAN functions. According to an embodiment, the RIC subscription request message may include a RAN function identifier (ID) for indicating a RAN function and an event trigger definition list including one or more event trigger definition information elements (IEs) associated with the RAN function ID.

Methods according to embodiments described in claims or specifications of the present disclosure may be implemented as a form of hardware, software, or a combination of hardware and software.

In case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A method performed by an E2 node, the method comprising:
receiving, from a near-real time (Near-RT) radio access network (RAN) intelligent controller (RIC), an RIC subscription request message; and
transmitting, to the Near-RT RIC, an RIC subscription response message,
wherein the RIC subscription request message includes a RAN function list information element (IE) for indicating one or more RAN functions.

2. The method of claim 1,
wherein the RAN function list IE includes:
a RAN identifier (ID) corresponding to each RAN function, and
information on one or more event trigger definition IEs corresponding to each RAN function.

3. The method of claim 2,
wherein the information on one or more event trigger definition IEs corresponding to each RAN function is configured in a list format, and
wherein the information on one or more event trigger definition IEs is associated with one RAN function identifier (ID).

4. The method of claim 1,
wherein the RIC subscription response message includes an admitted list including at least one RAN function admitted by the E2 node among the one or more RAN functions.

5. A method performed by an E2 node, the method comprising:
receiving, from a near-real time (Near-RT) radio access network (RAN) intelligent controller (RIC), an RIC subscription request message; and
transmitting, to the Near-RT RIC, an RIC subscription response message,
wherein the RIC subscription request message includes:
a RAN function identifier (ID) for indicating a RAN function, and
an event trigger definition list including one or more event trigger definition information elements (IEs) associated with the RAN function ID.

6. A method performed by a near-real time (Near-RT) radio access network (RAN) intelligent controller (RIC), the method comprising:
transmitting, to an E2 node, an RIC subscription request message; and
receiving, from the E2 node, an RIC subscription response message,
wherein the RIC subscription request message includes a RAN function list information element (IE) for indicating one or more RAN functions.

7. The method of claim 6,
wherein the RAN function list IE includes:
a RAN identifier (ID) corresponding to each RAN function, and
information on one or more event trigger definition IEs corresponding to each RAN function.

8. The method of claim 7,
wherein the information on one or more event trigger definition IEs corresponding to each RAN function is configured in a list format, and
wherein the information on one or more event trigger definition IEs is associated with one RAN function identifier (ID).

9. The method of claim 6,
wherein the RIC subscription response message includes an admitted list including at least one RAN function admitted by the E2 node among the one or more RAN functions.

10. A method performed by a near-real time (Near-RT) radio access network (RAN) intelligent controller (RIC), the method comprising:
transmitting, to an E2 node, an RIC subscription request message; and
receiving, from the E2 node, an RIC subscription response message,
wherein the RIC subscription request message includes:
a RAN function identifier (ID) for indicating a RAN function, and
an event trigger definition list including one or more event trigger definition information elements (IEs) associated with the RAN function ID.

11. An apparatus performed by an E2 node, the apparatus comprising:
at least one transceiver; and
at least one processor coupled to the at least one transceiver,
wherein the at least one processor is configured to perform one of methods 1 to 5.

12. An apparatus performed by a near-real time (Near-RT) radio access network (RAN) intelligent controller (RIC), the apparatus comprising:
at least one transceiver; and
at least one processor coupled to the at least one transceiver,
wherein the at least one processor is configured to perform one of methods 6 to 10.

13. A non-transitory storage medium, comprising:
memory storing instructions,
wherein the instructions, when executed by at least one processor, cause an E2 node to:
receive, from a near-real time (Near-RT) radio access network (RAN) intelligent controller (RIC), an RIC subscription request message; and
transmit, to the Near-RT RIC, an RIC subscription response message,
wherein the RIC subscription request message includes:
a RAN function identifier (ID) for indicating a RAN function, and
an event trigger definition list including one or more event trigger definition information elements (IEs) associated with the RAN function ID.

14. A non-transitory storage medium, comprising:
memory storing instructions,
wherein the instructions, when executed by at least one processor, cause a near-real time (Near-RT) radio access network (RAN) intelligent controller (RIC) to:
transmit, to an E2 node, an RIC subscription request message; and
receive, from the E2 node, an RIC subscription response message,
wherein the RIC subscription request message includes:
a RAN function list information element (IE) for indicating one or more RAN functions, and
a RAN function identifier (ID) for indicating a RAN function and an event trigger definition list including one or more event trigger definition information elements (IEs) as sociated with the RAN function ID.
